# EUROPÄISCHE PATENTSCHRIFT

(11) **EP 3 480 008 B1**
(45) Veröffentlichungstag und Bekanntmachung des Hinweises auf die Patenterteilung: **05.01.2022**
(21) Anmeldenummer: 17199838.8
(22) Anmeldetag: 03.11.2017
(51) Int. Cl.: B32B 5/06, B32B 5/12, B32B 5/22, B32B 5/24, B32B 5/26, B32B 29/02, B32B 3/12, E04C 2/36, E04C 3/08

(54) **LEICHTBAUTEIL**
LIGHTWEIGHT COMPONENT
ÉLÉMENT STRUCTUREL LÉGER

(43) Veröffentlichungstag der Anmeldung: 08.05.2019
(73) Patentinhaber: Bucher Leichtbau AG, 8117 Fällanden (CH)
(72) Erfinder: SCHERTLER, Michael, 35684 Dillenburg (DE); MÜLLER, Ruxandra, 8152 Glattpark (Opfikon) (CH)
(74) Vertreter: Liebetanz, Michael

(56) Entgegenhaltungen:
- EP-A1- 0 579 000
- EP-A2- 0 768 167
- WO-A1-01/05668
- DE-A1- 4 127 734
- DE-A1-102005 053 890
- DE-A1-102006 035 847
- DE-A1-102006 039 572
- DE-A1-102009 032 663
- DE-A1-102010 050 872
- US-A- 3 649 435
- US-A- 3 713 959
- US-A- 4 016 022
- US-A- 4 186 044

## Beschreibung

### TECHNISCHES GEBIET

Die vorliegende Erfindung betrifft ein Leichtbauteil, das einen Wabenkern enthält, wobei gegenüber dem Wabenkern beidseitig benachbart jeweils eine Prepreg-Deckschicht vorgesehen ist, mit den Merkmalen des Oberbegriffs des Anspruchs 1.

### STAND DER TECHNIK

Ein Leichtbauteil mit den Merkmalen des Oberbegriffs des Anspruchs 1 ist aus der US 2010/055384 A1 bekannt.

Die EP 0 927 737 B1 beschreibt eine Kombination von Prepreg-Gewebe und einer wabenförmigen Sandwich-Platte, wobei die Deckschichten umfassen: ein Gewebe als Verstärkungsfasern, ein gehärtetes duroplastisches Harz und Feinteilchen aus einem thermoplastischen Harz, mit den Merkmalen des Oberbegriffs des Anspruchs 1.

Innenwände für Luftfahrzeuge sind in DE 10 2011 082 087 offenbart und haben einen CFK-Verbund, einen Prepreg- und einen Wabenverbund, um formtreue, masshaltige und biegesteife Sandwich-Faserkunststoffverbund-Bauteile zu ermöglichen.

Ein Prepreg ist die englische Kurzform für preimpregnated fibres und benennt somit zu deutsch: "vorimprägnierte Fasern". Die in einem Prepreg enthaltenen Fasern können als reine unidirektionale Schicht, als Gewebe oder Gelege vorliegen.

Ein Gewebe wie in der EP 0 927 737 ist als Oberbegriff definiert für manuell oder maschinell gefertigte textile Flächengebilde aus mindestens zwei rechtwinklig oder nahezu rechtwinklig verkreuzten Fadensystemen.

Die US 4,016,022 A zeigt ein Prepregmaterial mit einem Hexcel CR-III Kern, wobei der Wabenkern von teflonbeschichtetem Glasgewebe abgedeckt ist.

Die WO 01/05668 A1 zeigt ein Leichtbauteil für Cargobehälter aus Prepregschichten, die aber im Gegensatz zur oben genannten US 2010/055384 noch zusätzliche Verbindungsfäden aufweisen.

Die US 3,649,435 betrifft ein harzimprägniertes Lamellenstrukturmaterial, das Graphitverstärkungsfasern und anorganische Papiere oder Matten, wie Asbest, Asbestglaspapier oder Glimmermatte, enthält.

Die US 4,186,044 offenbart ein Strukturmaterial, welches zusätzlich zu einem Wabenkern eine Epoxidkleberschicht und mit einem Epoxidharz vorimprägnierte Graphitfasern in weiteren Verstärkungsschichten umfasst. Diese Verstärkungsschichten können unidirektional, gewebt oder multidirektional sein, wobei die Faserkombination bei null, fünfundvierzig und neunzig Grad liegen kann.

Die DE 41 27 734 beschreibt eine Mehrschichtplatten mit einerm zentralen Wabenkern. Dieser Wabenkern ist mit Deckchichten abgedeckt, wobei diese Mehrschichtplatte mit einem dichten Netz von innerhalb der Platte verlaufenden Kanälen versehen ist. Hierzu sind in der Kernschicht oder in einer der Deckschichten oder aber in der Kernschicht und der Deckschicht deckungsgleich die Kanäle mit dem gewünschten Querschnitt vor dem Zusammenfügen der Schichten zur Platte durch Fräsen oder Schneiden oder Pressen eingebracht. Danach werden die Kernschicht und die beiden Deckschichten durch Kleben oder Siegeln zur Mehrschichtplatte miteinander verbunden. Bei einem wabenförmigen Kern ist es zweckmäßig, die Waben im Bereich der Kanäle mit thermoplastischen oder duroplastischen Kunststoffen oder Schaumstoffen zur Versteifung der dünnen Zellwände der Waben auszugiessen.

Kohlenstofffaserverstärkter Kunststoff, kurz CFK, im Englischen auch carbon-fiberreinforced polymer (CFRP) genannt, ist ein Verbundwerkstoff, bei dem Kohlenstofffasern in eine Kunststoff-Matrix eingebettet sind. Der Matrix-Werkstoff dient zur Verbindung der Fasern sowie zum Füllen der Zwischenräume. Als Matrixwerkstoff wird meist Epoxidharz verwendet, aber auch andere Duroplaste oder Thermoplaste möglich und gebräuchlich.

Ein Gelege ist ein Flächengebilde aus einer oder mehreren Lagen von parallel verlaufenden, gestreckten Fäden, welches im Englischen als non-crimp fabric (NCF) bezeichnet wird. Die Fadenlagen bei mehrlagigen Gelegen können alle unterschiedliche Orientierungen aufweisen, auch aus unterschiedlichen Fadendichten und unterschiedlichen Fadenfeinheiten bestehen.

### DARSTELLUNG DER ERFINDUNG

Ausgehend von diesem Stand der Technik ist es eine Aufgabe der vorliegenden Erfindung, ein Leichtbauteil anzugeben, welches gegenüber dem Stand der Technik eine höhere Lastaufnahme ohne grössere Gewichtszunahme ermöglicht.

Ein solches Leichtbauteil weist die Merkmale des Anspruchs 1 auf. Dabei weist der Wabenkern auf seinen beiden Seiten Ausfräsungen auf, deren Anordnung, Dimensionen und Tiefe der Anordnung, Dimensionen und Tiefe der mindestens einen weiteren Deckschicht im fertigen Leichtbauteil entspricht, so dass die Aussenseiten des Leichtbauteils einen glatten Aspekt aufweisen.

Mindestens zwei der weiteren Deckschichten des Leichtbauteils können disjunkte Flächen abdecken. Dann sind auch entsprechend angepasste Vertiefungen bei der Ausfräsung der Deckschicht des Wabenkerns angepasst.

Im unteren Bereich des Leichtbauteils können auf einer Seite mindestens ein, insbesondere zwei Klappsitze angebaut sein.

Seitlich an einen Ausschnitt im Leichtbauteil kann eine durchgehende Deckschicht vom unteren Rand an den oberen Rand des Leichtbauteils heranreichen für eine strukturelle Verstärkung des Leichtbauteils. Ein solcher Ausschnitt kann insbesondere für einen Bahrendurchreicheausschnitt vorgesehen sein.

Es kann bei einem Leichtbauteil mit Durchreiche auch mindestens eine Deckschicht vorgesehen sein ist, die an die Kante des Ausschnitts heranreicht, aber in Bezug auf die umliegenden Kanten des Leichtbauteils nur an die Kante zur Flugzeughülle anstösst. Damit kann mit wenig Material die Belastung auf das Leichtbauteil besser in das Flugzeughüllengerüst abgeleitet werden.

Schliesslich kann das Leichtbauteil ganz aussen eine Gewebeschicht auf der oder den äussersten Deckschichten aufweisen, insbesondere eine E-Glass-Schicht.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Darstellung eines Leichtbauteils;
- Fig. 2: eine schematische perspektivische Explosionsdarstellung einer ersten, äussersten Deckschichtanordnung eines Leichtbauteils nach Fig. 1;
- Fig. 3: eine schematische Darstellung von Ausrichtungen von unidirektionalen Gelegen, die im Verbund als Stack vorliegen;
- Fig. 4: eine schematische Draufsicht auf die Umrisse des Leichtbauteils nach Fig. 1 mit eingezeichneter Positionierung einer zweiten, inneren Deckschichtanordnung nach Fig. 7;
- Fig. 5: eine schematische Draufsicht auf die Umrisse des Leichtbauteils nach Fig. 1 mit eingezeichneter Positionierung einer dritten, inneren Deckschichtanordnung nach Fig. 6;
- Fig. 6: eine schematische perspektivische Explosionsdarstellung der dritten Deckschichtanordnung eines Leichtbauteils nach Fig. 1 an der Position der Fig. 5;
- Fig. 7: eine schematische perspektivische Explosionsdarstellung der zweiten Deckschichtanordnung eines Leichtbauteils nach Fig. 1 an der Position der Fig. 4;
- Fig. 8: eine schematische Teil-Draufsicht auf eine Schicht einer vierten, inneren Deckschichtanordnung eines Leichtbauteils nach Fig. 1 an der in Fig. 9 eingezeichneten Position;
- Fig. 9: eine schematische Draufsicht auf die Umrisse des Leichtbauteils nach Fig. 1 mit eingezeichneter Positionierung der vierten Deckschichtanordnung nach Fig. 8 und weiteren inneren Deckschichtanordnungen, und
- Fig. 10: eine schematische perspektivische Explosionsdarstellung einer weiteren Verstärkungs-Deckschichtanordnung eines Leichtbauteils nach Fig. 1.

### BESCHREIBUNG BEVORZUGTER AUSFÜHRUNGSFORMEN

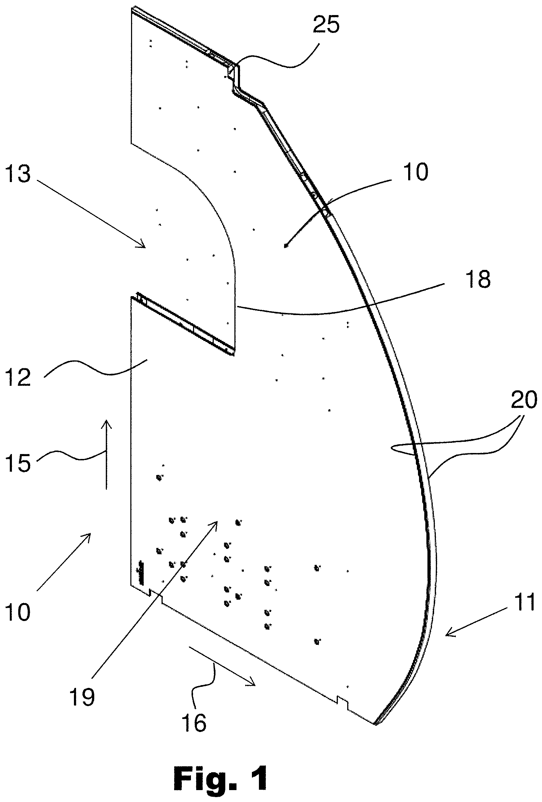

Die Fig. 1 zeigt eine schematische perspektivische Darstellung eines Leichtbauteils 10, insbesondere einer Innenwand eines Flugzeugs. Das Leichtbauteil 10 hat eine der Innenform der Flugzeughülle folgende gekrümmte Aussenkante 11, eine vertikal ausgerichtete zentrale Innenkante 12 und einen Ausschnitt 13. Mit dem Bezugszeichen 19 ist der Bereich einer Sitz-Befestigungsfläche eingezeichnet. Im Bereich dieser Sitz-Befestigungsfläche 19 werden beispielsweise nebeneinander zwei Klappsitze für die Kabinenbesatzung des Flugzeugs befestigt, auf denen dann zwei Flugbegleiter insbesondere während der Start- und Landephase oder sonstiger festgelegter Zeiten einen Sitzplatz einnehmen können. Durch das Gewicht der Personen werden an diese Wand hohe Anforderungen der Stabilität gestellt. Diese englisch abgekürzt CAS (cabin attendant seats) genannten Sitzplätze am Leichtbauteil integriert stellt hohe Anforderungen an Steifigkeit bei gleichzeitig möglichst geringem Gewicht des Leichtbauteils.

Eine weitere Schwierigkeit der Integration des Leichtbauteils, insbesondere mit der Befestigung von Klappsitzen entsteht bei einem optionalen Vorsehen von einer Krankenbahredurchreiche, in englisch stretcher flap, in Form eines Ausschnitts 13, wie es in der Fig. 1 dargestellt ist. Dabei ist es wenig relevant, ob dieser Ausschnitt 13 durch einen formgenauen Einsatz gefüllt wird. Es wird eine Schwachstelle gebildet, insbesondere an der Innenseite 18 des Ausschnitts 13. Diese Problematik wird mit den Mitteln der Erfindung ebenfalls gelöst. Die Durchreiche für eine Krankenbahre wird in einem Flugzeug insbesondere im Bereich der hinteren Aussentür verlangt, wo der Freiraum in der Galley zu klein ist, um eine durch die Tür in das Flugzeug eingeführte Krankenbahre um 90 Grad zu drehen und in den Kabineninnenraum weiterzuleiten. Dann erlaubt der Ausschnitt 13, diese Drehung auszuführen.

In der Fig. 1 sind Deckschichtenanordnungen 20 zu erkennen, die einen Wabenkern 25 umgeben und über diesen hinausragen. Dieses Hinausragen hat fertigungstechnische Gründe. In dieser Beschreibung wird der Begriff Deckschichtenanordnung für fertigungstechnisch einheitliche und einzeln gehandhabte Elemente verwendet, die als Prepregs vorliegen, insbesondere als Gelege von verbundenen CFK-Schichten. Auf den äusseren Deckschichtenanordnungen 20 ist ein Abschlussgewebe als äusserste Schicht aus E-Glass aufgebracht, welches hier nicht mit Bezugszeichen dargestellt ist.

Der Wabenkern 25 kann insbesondere aus Aramidfaserpapier auf Phenolharzbasis bestehen, beispielsweise hergestellt von der Fa. Schütz unter der Bezeichnung Cormaster N636. Der Wabenkern ist beidseitig der Wabenstruktur mit Papierdeckschichten ausreichender Dicke versehen, um die notwendigen Ausfräsungen für nicht vollständig die Umrisse des Leichtbauteils abdeckende Deckschichtanordnungen vornehmen zu können, ohne in den Bereich des inneren Wabenkerns vorzustossen.

Das Panel verwendet dann eine Kontaktlage zwischen Wabenkern 25 und den benachbarten Deckschichtanordnungen, somit teilweise auch zur ersten, äussersten Deckschichtanordnung 20. Die Kontaktlage (nicht dargestellt) ist ein Polyestervlies auf Phenolharzbasis des Herstellers SGL mit der Bezeichnung Sigapreg H N30-P320 und einem Flächengewicht von ca. 35,0 gr./m².

Als Grundlage dient ein Aramidfaserpapier (Para-Aramid), das zum Wabenkern 25 verarbeitet wird. Der einsatzfähige Kern hat beispielsweise Waben mit einer Schlüsselweite von zwischen 2,5 und 5,5 mm, beispielsweise insbesondere 3,2 mm oder. 4,8 mm und ein Raumgewicht von beispielsweise 64 beziehungsweise 32,0 kg/m 3 für die beiden genannten beispielhaften Schlüsselweiten. Der Wabenkern 25 wird mittels Säge auf die richtige Höhe geschnitten. Die Toleranzen für die Schlüsselweiten und Raumgewichte sind mit ca. +/- 10% anzunehmen. Produktionsbedingt gibt es eine L- und W-Richtung des Wabenkerns 25. Die L-Richtung 15 ist die Richtung der aufeinander angeordneten Papierlagen, während die W-Richtung 16 die Richtung der Klebeverbindung der Papiere ist, also den Bezug zur Lagendicke hat. Beide sind um 90° versetzt zueinander. Die L-Richtung 15 des Kerns hat eine höhere mechanische Leistungsfähigkeit und wird somit in der Hauptbelastungsrichtung (Biegung) auf die Höhe der Partition in der Vertikalen ausgerichtet, wie es in der Fig. 1 dargestellt ist. Die W-Richtung 16 verläuft parallel zur Unterkante des Leichtbauteils 10.

Die Aussenflächen des Wabenkerns 25 werden gestuft abgefräst, damit die innenliegenden zweiten, dritten und weiteren Deckschichtanordnungen, wie nachstehend beschrieben, keine Beulen in der glatt vorzusehenden äussersten ersten Deckschichtanordnung 20 und allenfalls dekorativen Deckschichten erzeugen. Mit anderen Worten, die Fig. 1 zeigt die perspektivische Ansicht der äussersten ersten Deckschichtanordnung 20, während die zweite, dritte und vierte Deckschichtanordnung 40, 50 und 60, die in weiteren Figuren dargestellt sind, sich zwischen der äussersten ersten Deckschichtanordnung 20 und dem Wabenkern 25, beziehungsweise der Kontaktlage, befindet und sich dabei raumvolumenmässig in die ausgefrästen Vertiefungen einfügen, die komplementär zur Enddicke der weiteren Deckschichtanordnung 40, 50 und 60 aus der Deckschicht des Wabenkerns 25 herausgefräst sind.

Dabei ergibt sich der Vorteil von geringerem Materialverbrauch, geringerem Gewicht und einige wenige, dafür aber starke Elemente an den vorbestimmten Stellen ersetzen ein durchschnittliches Material grösserer Dicke über eine grosse Oberfläche.

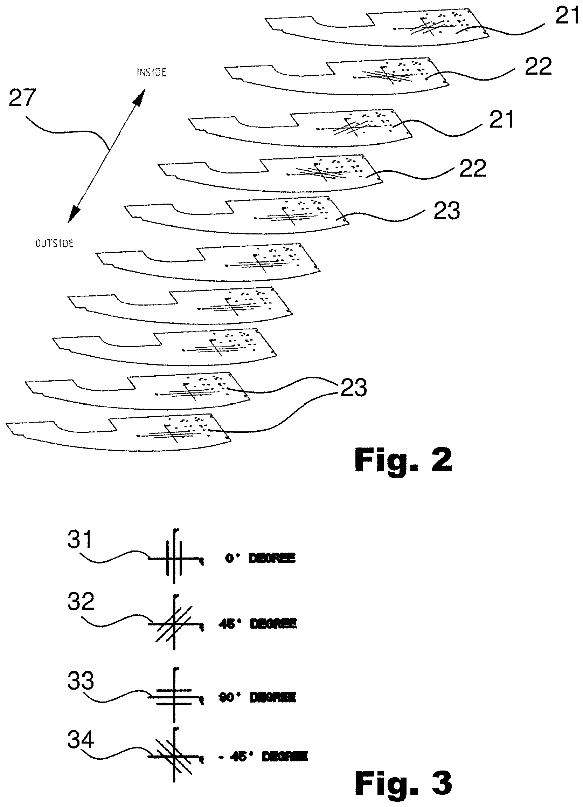

Die Fig. 2 zeigt eine schematische perspektivische Explosionsdarstellung der ersten Deckschichtanordnung 20 des Leichtbauteils 10 nach Fig. 1. Die erste Deckschichtanordnung 20 besteht aus einer Abfolge von zehn Gelegen 21, 22 und 23. Diese Gelege 21, 22 und 23 sind mit Symbolen zur Ausrichtung der unidirektionalen Fasern versehen. Die Deckschichtanordnung 20 bildet somit einen einheitlich handhabbaren Stack.

Die Fig. 3 zeigt eine schematische Darstellung von Ausrichtungen von unidirektionalen Gelegen, die durch die eingearbeiteten Fasern gekennzeichnet sind. Als Prepregs kommen unidirektionale Kohlenstofffaser-Gelege (CFK-Tapes) der Fa. SGL zum Einsatz, beispielsweise mit der Bezeichnung Sigrapreg C U150-0/ NF-P310 und einer Kohlenstofffaser SIGRAFIL C T50-4.4/255-E1 00 mit beispielsweise ca. 38,0 - 42,0% Phenolharzanteil oder mit der Bezeichnung Sigrapreg C U150-0/ NF-VT069B mit beispielsweise ca. 38,0 - 45,0% Phenolharzanteil, insbesondere 43,0%. Das Trockengewicht liegt bei ca. 150,0 gr./m². Eingebettet in die Phenolharzmatrix liegt das Flächengewicht des als Klebeprepreg ausgeführten Geleges ca. zwischen 242,0 - 248,0 gr./m².

Diese eingearbeiteten Fasern und deren Ausrichtung sind in den Symbolen der Fig. 3 dargestellt, nämlich für das unidirektionale Gelege 31 mit 0 Grad zur L-Richtung 15, das unidirektionale Gelege 32 mit +45 Grad Ausrichtung zur L-Richtung 15, das unidirektionale Gelege 33 mit 90 Grad zur L-Richtung 15 und das das unidirektionale Gelege 34 mit -45 Grad zur L-Richtung 15,

Die zehn Gelege 21, 22 und 23 sind mit dem Doppelpfeil 27 in Bezug auf die Ausrichtung von Innen (erstes Gelege 21) nach Aussen (sechs Gelege 23) bezeichnet, wobei das Wort "Innen" sich auf den Wabenkern bezieht. Die äussere Form der Gelege entspricht der Aussenform der jeweiligen ersten Deckschichtenanordnung 20. Dem innersten, also der Kontaktlage zugewandten, ersten Gelege 21 entspricht einer-45 Grad Anordnung der Fasern. Gefolgt wird diese durch eine +45 Grad Gelegeschicht 22. Diese Abfolge von Schichten wird wiederholt durch eine weitere Schicht mit -45 Grad Anordnung und einer weitere Schicht mit +45 Grad Anordnung. Dieser folgen sechs Schichten 23 mit einer 0 Grad Anordnung.

Es wurde oben spezifisch ausgesagt, dass das innerste erste Gelege 21 der Kontaktlage zugewandt ist. Das heisst nicht, dass es die Kontaktlage unmittelbar berührt. Wie oben erwähnt, ist es ein Vorteil der vorliegenden Ausführung, dass die weiteren Stacks und Deckschichtenanordungen "unterhalb" der äusserten Deckschichtanordnung 20 angeordnet sind und somit in vielen Bereichen eines von diesen weiteren Deckschichtanordnungen 40, 50, 60, 70 und deren "innerstes" Gelege diese Kontaktlage beziehungsweise den Wabenkern 25 in der entsprechend vorgesehenen Ausfräsung kontaktiert.

Die Materialstärke jeder einzelnen Gelegeschicht 21, 22 und 23, also jedes einzelnen Prepregs, liegt ca. zwischen 0,12 - 0,17 mm. Kreuzen sich die Fasern unter +/-45° bis+/- 90°, so ist im Faserverbund eine Dicke von ca. 0,15 - 0,17 mm pro Lage Prepreg anzunehmen. Liegen mehrere Lagen Prepreg parallel in einer Richtung, wie die sechs Lagen 23, so kann mit einer Lagendicke von ca. 0,12 - 0,15 mm gerechnet werden. Letzteres ist als der "Nesting effect" zu bezeichnen, da dann die übereinander liegenden gleichausgerichteten Lagen jeweils in einer weiteren Schicht zwischen zwei nebeneinander liegende Faseranordnungen zu liegen kommen.

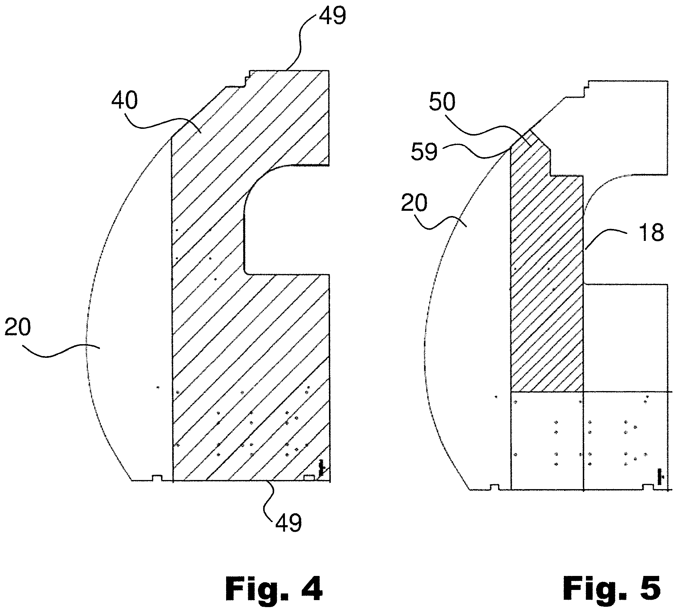

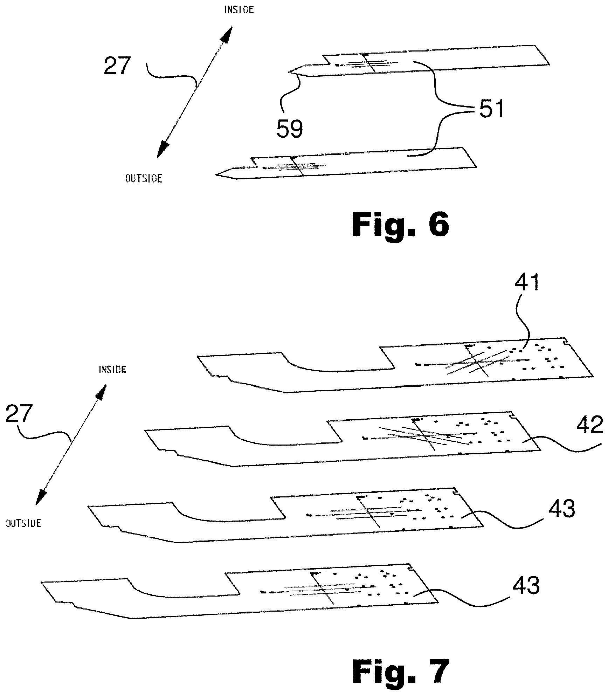

Die Fig. 4 zeigt eine schematische Draufsicht auf die Umrisse des Leichtbauteils 10 nach Fig. 1, vorgegeben durch die erste Deckschichtenanordnung 20. Dabei ist die Positionierung einer zweiten Deckschichtanordnung 40 nach Fig. 7 eingezeichnet. Diese zweite Deckschichtanordnung 40 wird innen in Richtung des Wabenkerns 25 aufgebracht. In gleicher Weise zeigt Fig. 5 eine schematische Draufsicht auf die Umrisse des Leichtbauteils 10 nach Fig. 1 mit eingezeichneter Positionierung einer dritten Deckschichtanordnung 50 nach Fig. 6.

In beiden Fällen wird nur ein Teil der Gesamtfläche des Leichtbauteils 10 mit der zusätzlichen Deckschichtanordnung 40 oder 50 belegt. Die zweite Deckschichtanordnung 40 ist dabei über die gesamte lasttragende Bauhöhe eingesetzt, besitzt eine Befestigungskante 49 gegenüber den vertikalen Aussenkanten und lässt nur einen Teil der gekrümmten Aussenwand-nahen Fläche seitlich aus, während die dritte Deckschichtanordnung 50 nur einen Teil der Bauhöhe abdeckt, aber mit der oberen Ecke an eine Befestigungskante 59 angrenzt.

Die Befestigungskante 49 bezeichnet einerseits den Übergang zu Deckeneinbaus des Flugzeugs, der upper inboard Verbindung, und andererseits den Übergang zum Bodeneinbau des Flugzeugs, der lower inboard Verbindung. Die Befestigungskante 59 signalisiert die weitere Befestigung an dem Innenausbaugerüst der Flugzeughülle, der outboard Verbindung.

Dafür werden in dem Wabenkern 25 an entsprechend vom Flugzeughersteller vorgegebenen Gerüstmatrixmassen vertikal zu den besagten Kanten 49 und 59 ausgerichtete Ausfräsungen im Wabenmaterial vorgenommen, in die Verbindungselemente eingeklebt werden, insbesondere aus Titanlegierungen bestehende Elemente, in die beispielsweise Tannenbaum artige Verbindungen angeschlossen werden.

Die Fig. 6 zeigt eine schematische perspektivische Explosionsdarstellung der dritten Deckschichtanordnung 50 eines Leichtbauteils 10 nach Fig. 1 an der Position der Fig. 5 und die Fig. 7 zeigt eine schematische perspektivische Explosionsdarstellung der zweiten Deckschichtanordnung 40 eines Leichtbauteils 10 nach Fig. 1 an der Position der Fig. 4.

Die beiden Gelege 51 der dritten Deckschichtanordnung 50 sind beide unidirektionales Gelege 0°. Die vier Gelege 41, 42 und 43 weisen von Innen nach Aussen gesehen eine Verstärkungslage -45° 41, eine Verstärkungslage +45° 42 und anschliessend zwei Verstärkungslagen 0° 43 auf.

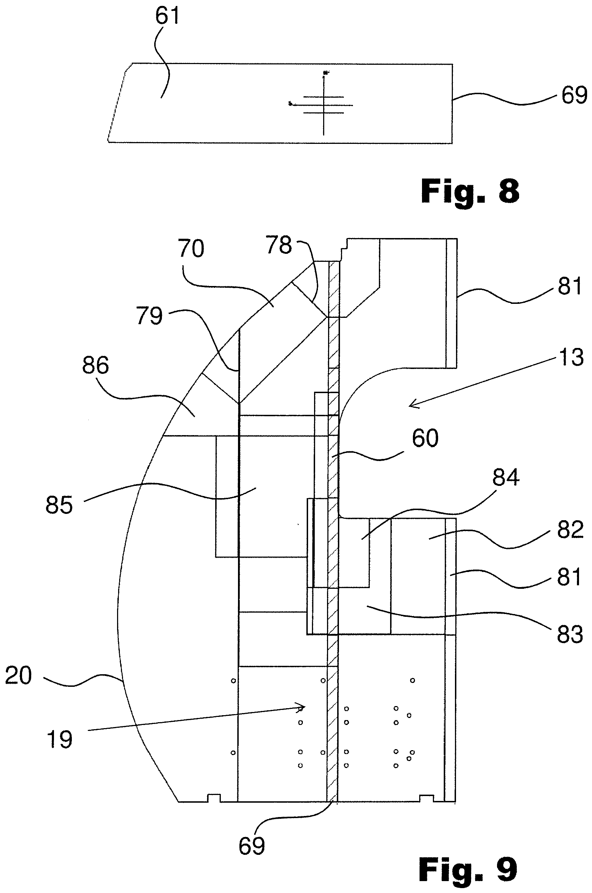

Die Fig. 8 zeigt eine schematische Teil-Draufsicht auf eine Schicht 61 einer vierten Deckschichtanordnung 60 eines Leichtbauteils 10 nach Fig. 1 an der in Fig. 9 eingezeichneten Position; und Fig. 9 zeigt eine schematische Draufsicht auf die Umrisse des Leichtbauteils 10 nach Fig. 1 mit eingezeichneter Positionierung der vierten Deckschichtanordnung 60 nach Fig. 8 und weiteren Deckschichtanordnungen 70, 81, 82, 83, 84, 85 und 86.

Die Gelegeschicht 61 ist mit ihrer unteren Kante 69 dargestellt, während die linke Seite abgeschnitten dargestellt ist. Die vierte Deckschichtanordnung 60 besteht aus einem dünnen Streifen, der über die gesamte Bauhöhe angeordnet ist und aus zehn Gelegeschichten besteht, die alle in der 0° Richtung ausgerichtet sind.

Ferner sind in der Fig. 9 weitere Deckschichtanordnungen 70 und 81 bis 86 zu erkennen, die an verschiedenen Stellen in Bezug auf die erste Deckschichtanordnung 20 direkt unter dieser oder auf anderen unterliegenden Deckschichtanordnungen, teilweise überlappend, aufgebracht sind. Dabei werden Teilbereiche des Leichtbauteils 10 gezielt verstärkt. Dabei können beispielsweise zwei bis fünfzehn Schichten verwendet werden. Bei der Deckschichtanordnung 84 sind es vier Schichten mit Ausrichtungen -45°, +45°, -45° und +45° von Innen nach Aussen gesehen. Bei der Deckschichtanordnung 82 ist es eine Abfolge von -45°, +45°, bei der Deckschichtanordnung 85 90°.

Das Leichtbauteil wird in einem Flugzeug eingebaut. Dafür bestehen einzelne vorgegebene Befestigungspunkte und Elemente an der Flugzeughülle. Diese Befestigungsbereiche, die sich bei dem Leichtbauteil als Befestigungskanten 49 und 59 darstellen, müssen in ihrer Umgebung ggf. besonders abgesichert werden. Die Standardverbindungspunkte sind die parallelen unteren und oberen Kanten 49. Hinzu kommt die Befestigung im gekrümmten Bereich der Flugzeughüllenverbindung an der Befestigungskante 59.

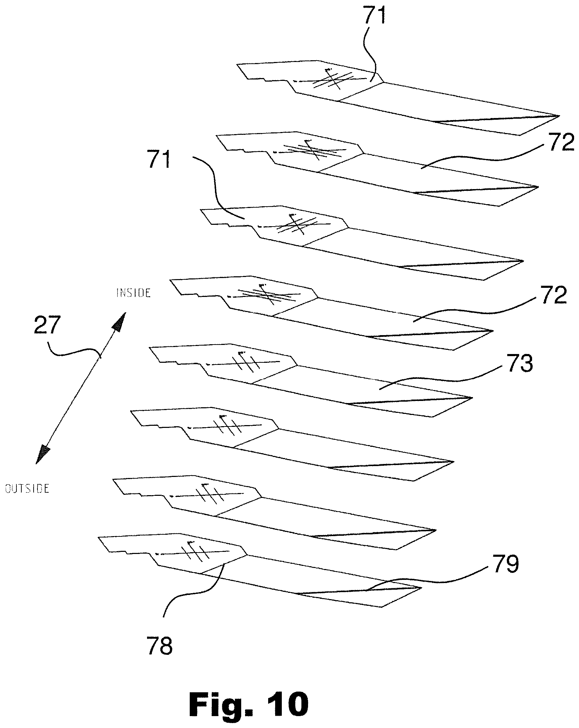

Die Fig. 10 zeigt schliesslich eine schematische perspektivische Explosionsdarstellung der weiteren Befestigungs-Deckschichtanordnung 70 eines Leichtbauteils nach Fig. 1. Diese Befestigungs-Deckschichtanordnung 70 besteht aus einem Stack aus acht Schichten, die wiederum gemäss dem Pfeil 27 von Innen nach Aussen angeordnet sind.

Die äussersten vier Gelege 73 der Befestigungs-Deckschichtanordnung 70 sind unidirektionales Gelege 90°. Die vier Gelege 71, 72, 71 und wieder 72 weisen von Innen nach Aussen gesehen eine Verstärkungslage -45° 71, eine Verstärkungslage +45° 72 und anschliessend dieselbe Reihenfolge von Verstärkungslagen -45° und +45° auf.

Die Fig. 10 zeigt eine Besonderheit dieser Befestigungs-Deckschichtanordnung 70, die je nach Ausgestaltung der Abfolge von Stacks auch andere Deckschichten haben können. Es sind zwei Linien 78 und 79 eingezeichnet, die die Befestigungs-Deckschichtanordnung 70 optisch in drei Teile unterteilen. Die Ausrichtung der Verstärkungslage ist aber einheitlich über die gesamte Deckschichtanordnung 70.

Die Linien sind zur Erläuterung ebenfalls in der Fig. 9 eingezeichnet. Aus der sich ergibt, dass über der weiter innen angeordneten Deckschichtanordnung 70 die Deckschichtanordnung 50 aus Fig. 5 vorgesehen ist. Ebenfalls ist die weitere Deckschichtanordnung 86 in diesem Bereich vorgesehen. In der Wabenkernabdeckung sind zwar entsprechende Ausnehmungen zur Aufnahme all dieser Deckschichtanordnungen vorgesehen, aber die innerste Deckschichtanordnung 70, die dann auf der Kontaktlage zu liegen kommt, wird durch die äusseren einzelnen Deckschichtanordnungen in einem geringen Masse "ausgebeult", so dass sich optisch sichtbare Positionsänderungen der einzelnen Bereiche einer Deckschichtanordnung 70 ergeben, die jedoch an der Festigkeit im wesentlichen keinen Einfluss haben.

**BEZUGSZEICHENLISTE**

| | | | |
|---|---|---|---|
| 10 | Leichtbauteil | 41 | Verstärkungslage -45 Grad |
| 11 | Aussenkante | 42 | Verstärkungslage +45 Grad |
| 12 | Innenkante | 43 | Verstärkungslage 0 Grad |
| 13 | Ausschnitt | 49 | Befestigungskante |
| 15 | L-Richtung | 50 | dritte Deckschichtanordnung |
| 16 | W-Richtung | 51 | Verstärkungslage 0 Grad |
| 18 | Innenseite | 59 | Befestigungskante |
| 19 | Sitz-Befestigungsfläche | 60 | vierte Deckschichtanordnung |
| 20 | erste Deckschichtanordnung, äusserster Stack | 61 | Verstärkungslage 0 Grad |
| | | 70 | weitere Befestigungs-Deckschichtanordnung |
| 21 | Verstärkungslage -45 Grad | | |
| 22 | Verstärkungslage +45 Grad | 71 | Verstärkungslage -45 Grad |
| 23 | Verstärkungslage 0 Grad | 72 | Verstärkungslage +45 Grad |
| 25 | Wabenkern | 73 | Verstärkungslage 0 Grad |
| 27 | Ausrichtung von Innen nach Aussen | 78 | Ebenenübergang in der |
| | | | Deckschichtanordnung |
| 31 | unidirektionales Gelege 0° | 79 | Ebenenübergang in der Deckschichtanordnung |
| 32 | unidirektionales Gelege +45° | | |
| 33 | unidirektionales Gelege 90° | 81-86 | weitere Deckschichtanordnungen |
| 34 | unidirektionales Gelege -45° | | |
| 40 | zweite Deckschichtanordnung | | |

## Patentansprüche

1. Leichtbauteil, das einen Wabenkern (25) enthält, wobei der Wabenkern (25) beidseitig seiner Wabenstruktur mit Papier-Deckschichten versehen ist, wobei gegenüber dem Wabenkern (25) beidseitig benachbart jeweils eine Prepreg-Deckschicht (20) vorgesehen ist, wobei diese Prepreg-Deckschicht (20) jeweils ein Gewebe als Verstärkungsfasern aufweist, wobei dem Leichtbauteil eine Hauptbelastungsrichtung zugeordnet ist, die der L-Richtung (11) der durchgehenden Papierbahn des Wabenkernmaterials entspricht, wobei die erste Prepreg-Deckschicht (20) aus mindestens drei übereinander liegenden Prepregs vorgesehen ist, die jeweils als ein unidirektionales Gelege (21, 22, 23) ausgestaltet sind, wobei ein erstes der unidirektionalen Gelege (21) zu +45 Grad zur besagten L-Richtung ausgerichtet ist, wobei ein zweites der unidirektionalen Gelege (23) parallel zu 0 Grad zur besagten L-Richtung ausgerichtet ist, und wobei ein drittes der unidirektionalen Gelege (22) zu -45 Grad zur besagten L-Richtung ausgerichtet ist, **dadurch gekennzeichnet, dass** die Prepreg-Deckschichten (20) jeweils den Wabenkern (25) auf seinen beiden Seiten vollständig abdecken, und dass beidseitig des Wabenkerns (25) mindestens eine Prepregschicht (40, 50, 60, 70, 81-86) vorgesehen ist, die nur einen Teilbereich der Fläche des Leichtbauteils (10) abdeckt und die mindestens ein Prepreg umfasst, das jeweils als mindestens ein unidirektionales Gelege (41, 42, 43; 51, 61) ausgestaltet ist, und dass der Wabenkern (25) auf beiden Seiten in seiner Papierdeckschicht Ausfräsungen aufweist, deren Anordnung, Dimensionen und Tiefe der Anordnung, Dimensionen und Tiefe der mindestens einen Prepregschicht (40, 50, 60, 70, 81-86) im fertigen Leichtbauteil entspricht.

2. Leichtbauteil nach Anspruch 1, dass die erste Prepreg-Deckschicht (20) eine doppelte Abfolge von unidirektionalen Gelege von -45° und +45° sind und eine nach aussen folgende drei bis sechsfache Schicht an unidirektionalen Gelege von 0° Ausrichtung folgen.

3. Leichtbauteil nach Anspruch 1 oder Anspruch 2, dass mindestens eine der Prepregschichten an den Rand (49, 59, 69) des Leichtbauteils (10) heranreicht.

4. Leichtbauteil nach Anspruch 3, dass eine Prepregschicht (70) vorgesehen ist, deren Breite in Bezug auf den Rand (59) bestimmt ist, um senkrecht zum Rand (59) vorgesehene in den Wabenkern (25) eingelassene Befestigungselemente für die Befestigung des Leichtbauteils an einem Flugzeughülleninnengerüst einer Flugzeughülle in deren eingelassene Tiefe vollkommen zu überdecken.

5. Leichtbauteil nach Anspruch 4, dass die Prepregschicht (70) mit ihrer Längsausrichtung im wesentlichen in einem 45 Grad Winkel zur L-Richtung ausgerichtet ist und dass sie eine Vielzahl von im 45 Grad Winkel zur Kante (59) ausgerichtete Gelegeschichten (73) aufweist.

6. Leichtbauteil nach einem der Ansprüche 1 bis 5, dass mindestens eine der Prepregschichten ohne Randberührung des Leichtbauteils (10) vorgesehen ist.

7. Leichtbauteil nach einem der Ansprüche 1 bis 6, dass mindestens zwei der Prepregschichten (71; 70, 74) des Leichtbauteils (10) disjunkte Flächen abdecken.

8. Leichtbauteil nach einem der Ansprüche 1 bis 7, dass auf einer Seite des Leichtbauteils mindestens ein, insbesondere zwei Klappsitze angebaut sind.

9. Leichtbauteil nach einem der Ansprüche 1 bis 8, dass seitlich an einen Ausschnitt (13), insbesondere einem Bahrendurchreicheausschnitt, im Leichtbauteil eine durchgehende Prepregschicht (69) von einem Rand an den gegenüberliegenden Rand des Leichtbauteils (10) heranreicht.

10. Leichtbauteil nach Anspruch 9, dass mindestens eine Prepregschicht (50) vorgesehen ist, die an die Kante (18) des Ausschnitts (13) heranreicht, aber in Bezug auf die umliegenden Kanten (49, 59, 69) des Leichtbauteils nur an eine dieser Kanten (59) anstösst.

11. Leichtbauteil nach einem der Ansprüche 1 bis 10, dass eine Gewebeschicht auf den äussersten Deckschichten (20) vorgesehen ist, insbesondere eine E-Glass-Schicht.

## Claims

1. Lightweight component which contains a honeycomb core (25), the honeycomb core (25) being provided on both sides of its honeycomb structure with paper cover layers, a prepreg cover layer (20) being provided in each case adjacent to the honeycomb core (25) on both sides, this prepreg cover layer (20) in each case having a fabric as reinforcing fibers, the lightweight part being assigned a main load direction which corresponds to the L direction (11) of the continuous paper web of the honeycomb core material, the first prepreg cover layer (20) being provided from at least three prepregs which are located one above the other and are each designed as a unidirectional scrim (21, 22, 23), wherein a first of the unidirectional scrims (21) is oriented at +45 degrees to said L-direction, wherein a second of the unidirectional scrims (23) is oriented parallel to 0 degrees to said L-direction, and wherein a third of the unidirectional scrims (22) is oriented at -45 degrees to said L-direction, **characterized in in that** the prepreg cover layers (20) each completely cover the honeycomb core (25) on both sides thereof, and **in that** on both sides of the honeycomb core (25) at least one prepreg layer (40, 50, 60, 70, 81-86) is provided which covers only a partial area of the surface of the lightweight component (10) and which comprises at least one prepreg which is designed in each case as at least one unidirectional scrim (41, 42, 43; 51, 61), and **in that** the honeycomb core (25) has, on both sides in its paper cover layer, cut-outs whose arrangement, dimensions and depth correspond to the arrangement, dimensions and depth of the at least one prepreg layer (40, 50, 60, 70, 81-86) in the finished lightweight component.

2. Lightweight component according to claim 1, wherein the first prepreg cover layer (20) is a double sequence of unidirectional scrims of -45° and +45° followed by an outwardly following three to six fold layer of unidirectional scrims of 0° orientation.

3. Lightweight component according to claim 1 or claim 2, wherein at least one of the prepreg layers extends to the edge (49, 59, 69) of the lightweight component (10).

4. Lightweight component according to claim 3, wherein a prepreg layer (70) is provided, the width of which with respect to the edge (59) is determined to completely cover fastening elements provided perpendicular to the edge (59) and recessed into the honeycomb core (25) for fastening the lightweight component to an aircraft hull inner frame of an aircraft hull to the recessed depth thereof.

5. Lightweight component according to claim 4, wherein the prepreg layer (70) is oriented with its longitudinal orientation substantially at a 45 degree angle to the L-direction and that it comprises a plurality of scrim layers (73) oriented at a 45 degree angle to the edge (59).

6. Lightweight component according to any one of claims 1 to 5, in that at least one of the prepreg layers is provided without edge contact of the lightweight component (10).

7. Lightweight component according to one of claims 1 to 6, wherein at least two of the prepreg layers (71; 70, 74) of the lightweight component (10) cover disjoint surfaces.

8. Lightweight component according to one of claims 1 to 7, wherein at least one, in particular two, folding seats are attached to one side of the lightweight component.

9. Lightweight component according to one of claims 1 to 8, wherein a continuous prepreg layer (69) extends laterally from one edge to the opposite edge of the lightweight component (10) to a cut-out (13), in particular a vehicle pass-through cut-out, in the lightweight component.

10. Lightweight component according to claim 9, wherein at least one prepreg layer (50) is provided which extends up to the edge (18) of the cut-out (13) but, with respect to the surrounding edges (49, 59, 69) of the lightweight component, abuts only one of these edges (59).

11. Lightweight component according to any one of claims 1 to 10, wherein a fabric layer is provided on the outermost cover layers (20), in particular an E-glass layer.

## Revendications

1. Elément structurel léger, qui contient une âme en nid d'abeilles (25), l'âme en nid d'abeilles (25) étant pourvue de couches de recouvrement en papier des deux côtés de sa structure en nid d'abeilles, une couche de recouvrement préimprégnée (20) étant respectivement prévue de manière adjacente des deux côtés par rapport à l'âme en nid d'abeilles (25), cette couche de recouvrement préimprégnée (20) présentant respectivement un tissu comme fibres de renforcement, une direction de charge principale étant associée à l'élément structurel léger, qui correspond à la direction L (11) de la bande de papier continue du matériau d'âme en nid d'abeilles, la première couche de recouvrement préimprégnée (20) étant prévue à partir d'au moins trois préimprégnés superposés, qui sont conçus chacun comme une couche unidirectionnelle (21, 22, 23), une première des couches unidirectionnelles (21) étant orientée à +45 degrés par rapport à ladite direction L, une deuxième des couches unidirectionnelles (23) étant orientée parallèlement à 0 degré par rapport à ladite direction L, et une troisième des couches unidirectionnelles (22) étant orientée à -45 degrés par rapport à ladite direction L, **caractérisé, en ce que** les couches de recouvrement préimprégnées (20) recouvrent respectivement complètement l'âme en nid d'abeilles (25) sur ses deux côtés, et **en ce que**, des deux côtés de l'âme en nid d'abeilles (25), il est prévu au moins une couche préimprégnée (40, 50, 60, 70, 81-86) qui ne recouvre qu'une zone partielle de la surface de l'élément structurel léger (10) et qui comprend au moins un préimprégné qui est respectivement au moins une couche unidirectionnelle (41, 42, 43 ; 51, 61), et **en ce que** le noyau en nid d'abeilles (25) présente des deux côtés, dans sa couche de couverture en papier, des fraisages dont la disposition, les dimensions et la profondeur correspondent à la disposition, aux dimensions et à la profondeur de la au moins une couche de préimprégné (40, 50, 60, 70, 81-86) dans l'élément structurel léger finie.

2. Élément structurel léger selon la revendication 1, dans lequel la première couche de recouvrement préimprégnée (20) est une double succession de couches unidirectionnelles de -45° et +45° et est suivie d'une couche de trois à six couches de couches unidirectionnelles de 0° orientées vers l'extérieur.

3. Élément structurel léger selon la revendication 1 ou la revendication 2, dans lequel au moins une des couches de préimprégné s'étend jusqu'au bord (49, 59, 69) de l'Élément structurel léger (10).

4. Élément structurel léger selon la revendication 3, dans lequel il est prévu une couche de pré-imprégné (70) dont la largeur par rapport au bord (59) est déterminée pour recouvrir entièrement des éléments de fixation prévus perpendiculairement au bord (59) et encastrés dans le noyau en nid d'abeilles (25) pour la fixation de Élément structurel léger à une ossature interne d'une coque d'avion, dans la profondeur encastrée de celle-ci.

5. Élément structurel léger selon la revendication 4, dans lequel la couche de préimprégné (70) est orientée avec son orientation longitudinale essentiellement à un angle de 45 degrés par rapport à la direction L et en ce qu'elle présente une pluralité de couches de pré-imprégné (73) orientées à un angle de 45 degrés par rapport au bord (59).

6. Élément structurel léger selon l'une des revendications 1 à 5, dans lequel qu'au moins l'une des couches de préimprégné est prévue sans contact avec le bord de l'élément structurel léger (10).

7. Élément structurel léger selon l'une des revendications 1 à 6, dans lequel au moins deux des couches de préimprégné (71 ; 70, 74) de l'élément structurel léger (10) recouvrent des surfaces disjointes.

8. Élément structurel léger selon l'une des revendications 1 à 7, dans lequel au moins un, en particulier deux sièges rabattables sont montés sur un côté de l'élément structurel léger.

9. Élément structurel léger selon l'une des revendications 1 à 8, dans lequel une couche de préimprégné (69) s'étend d'un bord au bord opposé de l'élément structurel léger (10) latéralement à une découpe (13), en particulier une découpe de passage de civière, dans l'élément structurel léger.

10. Élément structurel léger selon la revendication 9, dans lequel est prévu au moins une couche de préimprégné (50) qui s'étend jusqu'au bord (18) de la découpe (13), mais qui, par rapport aux bords environnants (49, 59, 69) de l'élément structurel léger, n'est en contact qu'avec l'un de ces bords (59).

11. Élément structurel léger selon l'une des revendications 1 à 10, dans lequel une couche de tissu est prévue sur les couches de recouvrement les plus extérieures (20), en particulier une couche de verre E.
